# EUROPEAN PATENT APPLICATION

(11) **EP 4 357 841 A1**
(43) Date of publication of application: **24.04.2024**
(21) Application number: 23204543.5
(22) Date of filing: 19.10.2023
(51) Int. Cl.: G02C 1/00, G02C 5/00, G02C 7/02, G02C 7/10, G02C 7/06

(54) **EYEGLASSES AND SUNGLASSES WITH CUT-OFF-SECTIONS AT LOWER PARTS OF THE LENSES**

(30) Priority: 20.10.2022 US 202217969699
(71) Applicant: Offman, Henoch M.A., 9963246 Bet Shemesh (IL)
(72) Inventor: Offman, Henoch M.A., 9963246 Bet Shemesh (IL)
(74) Representative: Lapienis, Juozas

(57) **Abstract**

Eyeglasses for nearsighted that include a right lens with a cut-off-section in its lower-left-side area, and a left lens with a cut-off-section in its lower-right-side area. The user can look through the cut-off-sections for reading. The size area of the lenses is larger than the cut-off-sections area by at least three times. Reading glasses that includes a right frame with a right-corner lens that is positioned in its lower-left-corner, and a left frame with a left-corner lens that is positioned in its lower-right-corner. Empty areas that are enclosed in the right and the left frames except the lenses areas are clear of lenses. The user can look through the corner lenses for reading from up close and to look through the empty areas for distance. The empty areas size is larger than the lenses areas size by at least three times.

## Description

### FIELD OF THE INVENTION

The invention relates to "window phone lenses" for eyeglass that are eyeglasses lenses with a large window cut out of the lens in order to make it possible to look through the window and see better without taking off the eyeglasses.

### BACKGROUND ART

There are nearsightedness people (myopia) that distant objects appear blurry and there are people who use reading glasses. For many people who are wearing eyeglasses, the invention facilitates the use of the phone or reading a note while wearing the eyeglasses (nearsighted). People who need their lenses only to see from far and are able to read text on the phone or notes without any lenses, generally children and adults below the age of frothy. For that category of people who would have like to use their phone, for example, without any lenses in order to see sharper, now they can do that with the "Window Phone Lenses" of the present invention.

### DESCRIPTION OF THE DRAWINGS

The intention of the drawings attached to the application is not to limit the scope of the invention and its application. The drawings are intended only to illustrate the invention and they constitute only one of its many possible implementations.

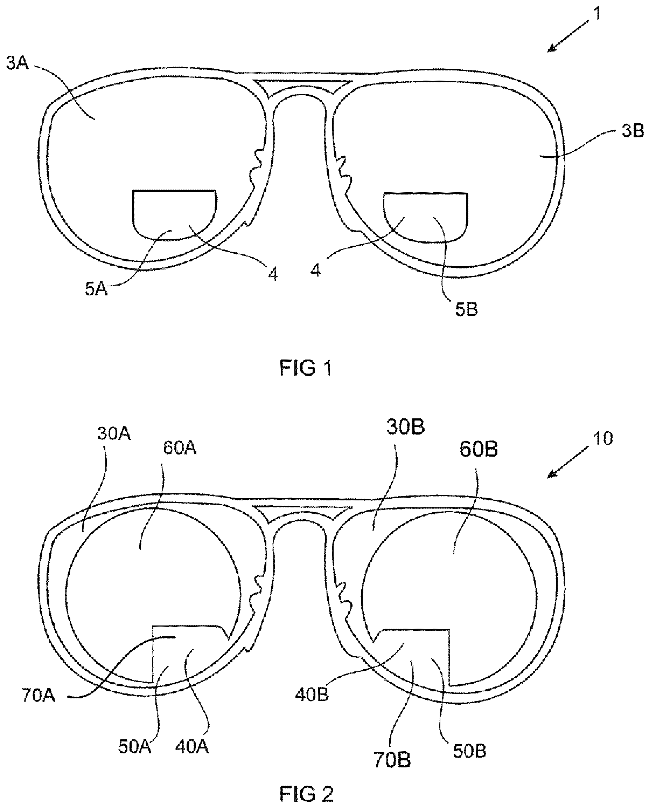

FIG. 1 depicts the eyeglasses (1).
FIG. 2 depicts the reading glasses (10).

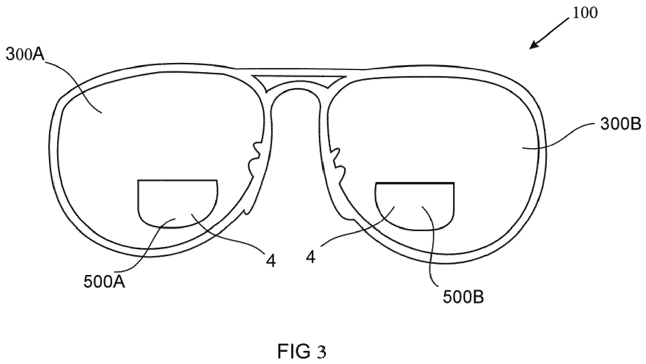

FIG. 3 depicts the sunglasses (100).

### THE INVENTION

For that category of people, nearsighted, who would have like to use their phone, for example, without any lenses in order to see sharper, now with the "Window Phone Lenses", there is no need to take off the eyeglasses or to look underneath them while using the phone or reading a note for a second. One can now just look through the "window" part which is a cut out of the lower part of the lenses and see perfectly.

Also for nearsighted people who are already wearing lenses with a low "minus" prescription, and have now reached the age of approximately forty, and started to need also a "plus" prescription, that is not higher than the number of their "minus" prescription, in order to see well from close. Such people will now be able to use their phone without being forced to use bifocals or expensive multifocals, and without having to take off their eyeglasses. They can just use the Window Phone Lenses with the window cut out of the lower part of the lenses and enjoy using their eyes without lenses while using their phone for example.

By the one type of fashion of eyeglasses, the lenses are small and narrow, so near sighted people were able to look easily underneath their lenses when using their phone in order to see sharper. But when using large lenses, which is another type of fashion, the near sighted people cannot look below their eyeglasses when using the phone in order to see well. The present invention solves this problem by providing the Window Phone Lenses.

By using the Window Phone Lenses the near sighted people can wear eyeglasses with large lenses when they find them suite to their taste of fashion.

When the phone is ringing, far sighted have to take out their reading glasses from their pocket and put them on quickly before the phone stops ringing. This procedure happens many times a day putting pressure on the person and making it hard for him. Therefore, a lot of people are wearing their reading glasses constantly in order to avoid such situations. However, a new problem arises. Now it is hard for them to see from far. Also, when using regular reading glasses for reading or writing, and while reading or writing someone asks them something, they usually have to take off their glasses in order to see the person, and these interruptions feel annoying. The present invention solves this problem too.

By using the Window Phone Lenses people will no longer need to use all day long their reading glasses, and will not have to buy expensive multifocals eyeglasses or bifocal, the user will be able to see clearly from a far by looking through the window part of his reading glasses, and will be able to see clearly from up close by using the lenses part of his reading glasses.

The advantageous of the Window Phone Lenses for far sighted people are: The users will be able to wear them all the time without having to take them off when looking afar. Users will use large lenses when this will be the fashion. They are cheaper than multifocals.

Many users, mainly over forty, are unable to get used to bifocal and to multifocals and the Window Phone Lenses of the present invention give them the best solution. In addition to that, when it's raining the lenses get wet and it is hard to see clearly, so looking through the window part of the eyeglasses enables the user to see much better than having to look through the wet lenses. In addition, when entering a warm place in a cold day the lenses are blurred by humidity and the user is forced to take them off immediately, and by using the Window Phone Lenses of the present invention the user can simply look through the window. The invention can be applied also on sunglasses, simply normal and regular sunglasses, as opposed to sunglasses whose lenses are also vision lenses for those who have myopia. Sometimes the sunglasses do not allow a quick reading of a note or a text on the mobile phone, because they darken the vision, and using the invention solves this problem. Also, for example while driving, the driver must wear sunglasses to protect his eyes from the glare of the sun, although occasionally he must look at the dashboard, and the sunglasses do not allow clear vision, in which case the invention offers a good solution.

It must be noted that at first reading it can be considered that the glasses with the lenses that are the subject of the present invention can be unattractive (despite their effectiveness in the cases described above), but it is the nature of fashion that it can surprise anyone. For example, in the distant past no one would have thought that ripped jeans would be fashionable; that people would buy new jeans in advance when they were torn, as well as new jeans with a used look. Likewise, it seems that the solution proposed above can be a unique and chic fashion model in itself.

Also, it is possible for a person to hold a pair of glasses according to the invention for special cases, such as professionals when driving for a long time, or during work or missions that requires a frequent transition from looking far to looking nearby, such as a bank clerk who interviews a customer and looks at the customer while he is talking to him and from time to time must type on the computer or on a paper form details that the customer gives him.

In summary, the present invention provides:
(a) Eyeglasses (1) for a nearsighted user that includes a right lens (3A) that has a cut-off-section (4) in a lower-left-side area (5A) of the right lens, and a left lens (3B) that has a cut-off-section (4) in a lower-right-side area (5B) of the right lens. The structure of these eyeglasses enables the user of these eyeglasses to look through the cut-off-sections for reading or writing texts or watching the smartphone while wearing the eyeglasses. It is preferably that the size of total areas of the right and left lenses will be larger than the size of total areas of the cut-off-sections by at least three times.
(b) Reading glasses (10) that include a right frame (30A) with a right-corner lens (40A) that is positioned in the lower-left-corner (50A) of the right frame, and a left frame (30B) with a left-corner lens (40B) that is positioned in the lower-right-corner (50B) of the left frame. The empty areas (60A) (60B) that are enclosed in the right frame and in the left frame except lenses areas (70A) (70B) of the right-corner and the left-corner lenses are clear of lenses. Therefore, looking through these empty areas it is the same as looking forward without glasses at all. The structure of these reading glasses enables the user of these reading glasses to look through the right-corner and the left-corner lenses for reading or writing and to look through the empty areas for distance.
(c) Sunglasses (100) that includes a right lens (300A) that has a cut-off-section (4) in a lower-left-side area (500A) of the right lens, and a left lens (300B) that has a cut-off-section (4) in a lower-right-side area (500B) of the right lens. The structure of these sunglasses enables the user of the sunglasses to look through the cut-off-sections for reading a text while wearing the sunglasses, and by that can see the text clearly and not dark as when looking through dark lenses of sunglasses. It is preferably that the size of the total areas of the right and left lenses will be larger than the size of the total areas of the cut-off-sections by at least three times. It is preferably that the size of the empty areas (60A) (60B) will be larger than the size of the lenses areas (70A) (70B) by at least three times.

## Claims

1. Eyeglasses (1) for a nearsighted user that includes a right lens (3A) that has a cut-off-section (4) in a lower-left-side area (5A) of the right lens, and a left lens (3B) that has a cut-off-section (4) in a lower-right-side area (5B) of the right lens; wherein enabling the user of the eyeglasses to look through the cut-off-sections for reading while wearing the eyeglasses.

2. The eyeglasses (1) of claim 1, wherein a size of a total area of said right and left lenses is larger than a size of a total area of said cut-off-sections by at least three times.

3. Reading glasses (10) that include a right frame (30A) with a right-corner lens (40A) that is positioned in a lower-left-corner (50A) of the right frame, and a left frame (30B) with a left-corner lens (40B) that is positioned in a lower-right-corner (50B) of the left frame; wherein empty areas (60A) (60B) that are enclosed in the right frame and in the left frame except lenses areas (70A) (70B) of the right-corner and the left-corner lenses are clear of lenses; wherein enabling the user of the reading glasses to look through the right-corner and the left-corner lenses for reading from up close and to look through said empty areas for distance.

4. The reading glasses (10) of claim 3, wherein a size of said empty areas (60A) (60B) is larger than a size of said lenses areas (70A) (70B) by at least three times.

5. Sunglasses (100) that includes a right lens (300A) that has a cut-off-section (4) in a lower-left-side area (500A) of the right lens, and a left lens (300B) that has a cut-off-section (4) in a lower-right-side area (500B) of the right lens; wherein enabling the user of the sunglasses to look through the cut-off-sections for reading from up close while wearing the sunglasses.

6. The sunglasses (100) of claim 5, wherein a size of a total area of said right and left lenses is larger than a size of a total area of said cut-off-sections.
